# EUROPEAN PATENT APPLICATION

(11) **EP 3 282 140 A1**
(43) Date of publication of application: **14.02.2018**
(21) Application number: 16776611.2
(22) Date of filing: 07.04.2016
(51) Int. Cl.: F16C 17/04, B60G 15/06, F16C 33/74, F16C 35/02, F16F 9/32

(54) **THRUST BEARING FOR VEHICLES**

(30) Priority: 10.04.2015 JP 2015080987
(71) Applicant: Oiles Corporation, Tokyo 108-0075 (JP)
(72) Inventor: YAMADA, Tomohiro, Fujisawa-shi Kanagawa 252-0811 (JP); MORISHIGE, Koichi, Fujisawa-shi Kanagawa 252-0811 (JP)
(74) Representative: Schlief, Thomas P.
(86) International application number: PCT/JP2016/061359
(87) International publication number: WO 2016/163445

(57) **Abstract**

Provided is a thrust bearing for vehicles, which is configured so that: the direct contact between an annular recess and an annular protrusion, which form a labyrinth structure between an upper case and a lower case, is avoided to prevent torque from increasing and noise from occurring; and lubricating oil present in the thrust bearing is prevented from leaking. A thrust bearing (100) for vehicles is configured so that a labyrinth structure (RB) comprising an annular recess (121b) and an annular protrusion (111ba), which are formed concentric with an upper case (110) and a lower case (120), is formed on the case outer peripheral side or the case inner peripheral side of the portion where the upper case (110) and the lower case (120) are in direct or indirect contact with each other, a labyrinth spacer member (140) for preventing the direct contact between the annular recess (121b) and the annular protrusion (111ba) is disposed between the annular recess (121b) and the annular protrusion (111ba), and the labyrinth structure (RB) reduces sliding resistance during relative pivoting to a level lower than that in the case where the annular recess (121b) and the annular protrusion (111ba) are in direct contact with each other.

## Description

### TECHNICAL FIELD

The present invention relates to a vehicle thrust bearing including upper and lower cases that are rotatable with respect to each other and more specifically to a vehicle thrust bearing that is incorporated into a vehicle as a thrust bearing of a Strut type (MacPherson type) suspension or an air suspension of a four-wheeled vehicle.

### BACKGROUND ART

Hitherto, as a vehicle thrust bearing, there is known a slide bearing made of synthetic resin and including an upper case made of synthetic resin fixed to a vehicle body side through a mounting member of Strut type suspension in a four-wheeled vehicle, a lower case made of reinforced synthetic resin overlapped with the upper case so as to be rotatable in a circumferential direction around an axial center of a piston rod used in the Strut type suspension with respect to the upper case, and a slide bearing piece made of synthetic resin and provided in a space between the upper and lower cases (see Patent Literature 1, for example).

Then, in a sectional profile viewed from the circumferential direction, an outer cylindrical skirt formed into a convex shape on the upper case toward the lower case and a cylindrical concave portion formed into a concave shape on the lower case form a so-called labyrinth structure to prevent infiltration of dust, mad, and the like into a space between the upper case and lower case.

### CITATION LIST

### Patent Literature

[Patent Literature 1] Japanese Patent Laid-Open No. 2014-206206 (see particularly FIG. 3)

### SUMMARY OF INVENTION

### Technical Problem

However, the conventional sliding bearing described above has a problem that lubricant oil filled between the upper case and the lower case may leak because an enough gap must be provided between the annular convex outer cylindrical skirt and the annular concave cylindrical concave portion such that they do not come into contact by considering that a torque may increase and an abnormal sound may be generated if the annular convex outer cylindrical skirt comes into direct contact with the annular concave cylindrical concave portion.

It is thus an object of the present invention to solve the above-described problems of the conventional art. The present invention provides a vehicle thrust bearing configured to avoid the annular concave portion and the annular convex portion that form the labyrinth structure between the upper case and the lower case from coming into direct contact so as to prevent increase of torque and generation of an abnormal sound and to prevent a leakage of lubricant oil filled within the thrust bearing.

### Solution to Problem

In order to solve the abovementioned problem, according to a first aspect of the present invention, a vehicle thrust bearing includes an annular upper case that is in contact with a vehicle body-side mount portion and an annular lower case overlapping with the upper case rotatably with respect to each other and configured to bear a thrust load at a contact spot where the upper case comes into direct or indirect contact with the lower case. A labyrinth structure composed of an annular concave portion and an annular convex portion formed concentrically on the upper case and the lower case is formed on a case outer circumferential side or a case inner circumferential side with respect to the contact spot. The labyrinth structure includes a labyrinth spacer member configured to prevent the annular concave portion from coming into direct contact with the annular convex portion and installed between the annular concave portion and the annular convex portion to reduce a sliding friction caused when the annular upper case and the annular lower case rotate with respect to each other as compared to a case where the annular concave portion comes into direction contact with the annular convex portion in the labyrinth structure.

In order to also solve the abovementioned problem, according to a second aspect of the present invention, in addition to the configuration of the vehicle thrust bearing as set forth in the first aspect, a sliding bearing piece made of synthetic resin for bearing a thrust load is installed in an annular space created between the upper case and the lower case.

In order to also solve the abovementioned problem, according to a third aspect of the present invention, in addition to the configuration of the vehicle thrust bearing as set forth in the second aspect, the labyrinth spacer member is formed of the same material of synthetic resin as the sliding bearing piece.

In order to also solve the abovementioned problem, according to a fourth aspect of the present invention, in addition to the configuration of the vehicle thrust bearing as set forth in any one of the first to third aspects, the labyrinth spacer member includes an anti-rotation engage portion configured to engage with the lower case to restrict the relative rotation.

In order to also solve the abovementioned problem, according to a fifth aspect of the present invention, in addition to the configuration of the vehicle thrust bearing as set forth in any one the first to fourth aspects, the lower case overlaps rotatably with the upper case around an axial center of a piston rod used in a shock absorber of a vehicular suspension and bears a load applied from a damper coil spring of the suspension.

### Advantageous Effects of Invention

Because the vehicle thrust bearing of the present invention includes the upper case that abuts on the vehicle body side attachment portion and the lower case that overlaps with the upper case so as to be rotatable with respect to the upper case, the upper case and the lower case can rotate smoothly with respect to each other. In addition, the vehicle thrust bearing of the present invention can achieve the following unique effects.

According to the vehicle thrust bearing of the invention of the first aspect, the labyrinth structure composed of the annular concave portion and the annular convex portion formed concentrically on the upper case and the lower case is formed on the case outer circumferential side or the case inner circumferential side with respect to the contact spot where the upper case comes into direct or indirect contact with the lower case and includes the labyrinth spacer member configured to prevent the annular concave portion from coming into direct contact with the annular convex portion and installed between the annular concave portion and the annular convex portion. Accordingly, it is possible to avoid the annular concave portion comes into direct contact with the annular convex portion and to reduce a sliding friction caused when the annular upper case and the annular lower case rotate with respect to each other as compared to a case where the annular concave portion comes into direction contact with the annular convex portion in the labyrinth structure so as to prevent an increase of torque and generation of an abnormal sound due to the direct contact.

Still further, because it is no longer necessary to provide a full gap between the annular concave portion and the annular convex portion and the gap between the annular concave portion and the annular convex portion can be narrowed, it is possible to prevent the leakage of the lubricant oil filled in the contact spot formed between the upper case and the lower case.

According to the vehicle thrust bearing of the present invention of the second aspect, in addition to the advantageous effects brought about by the invention of the first aspect, because the sliding bearing piece made of synthetic resin and configured to bear the thrust load is installed in the annular space created between the upper case and the lower case, the sliding friction between the upper case and the lower case becomes small and the relative rotation of the upper case and the lower case can be smoothed.

According to the vehicle thrust bearing of the present invention of the third aspect, in addition to the advantageous effects brought about by the invention of the second aspect, because the labyrinth spacer member is formed of the same raw material of synthetic resin as the sliding bearing piece, the labyrinth spacer member smoothly slides with respect to the upper case or the lower case even if the labyrinth spacer member comes into contact with the upper case and the sliding friction generated between the labyrinth spacer member and the upper case or the lower case can be reduced.

According to the vehicle thrust bearing of the present invention of the fourth aspect, in addition to the advantageous effects brought about by the invention of any one of the first to third aspects, because the labyrinth spacer member includes the anti-rotation engage portion configured to engage with the lower case to restrict the relative rotation, the labyrinth spacer member does not slide with the lower case and a degree of freedom of selection of raw material of the lower case can be increased.

According to the vehicle thrust bearing of the present invention of the fifth aspect, in addition to the advantageous effects brought about by the invention of any one of the first to fourth aspects, because the lower case overlaps rotatably with the upper case around the axial center of the piston rod used in the shock absorber of the vehicular suspension and bears the load applied from a damper coil spring of the suspension, the labyrinth spacer member comes into contact with the upper case in response to an unbalanced load. Accordingly, even if the unbalanced load acts on the lower case and the position of the lower case with respect to the upper case is slightly inclined, it is possible to reliably narrow the gap of the labyrinth structure and to minimize an increase of torque caused by the installation of the labyrinth spacer member.
- **FIG. 1**: is a partially sectional perspective view of a vehicle thrust sliding bearing of a first embodiment of the present invention.
- **FIG. 2**: is an exploded perspective view of the vehicle thrust sliding bearing of the first embodiment of the present invention.
- **FIG. 3**: is a plan view seen from a reference numeral 3 indicated in FIG. 1.
- **FIG. 4**: is a section view taken along a reference numeral 4-4 indicated in FIG. 3.
- **FIG. 5**: is an enlarged section view of a spot indicated by a reference numeral 5 in FIG. 4.
- **FIG. 6A**: is a section view of the vehicle thrust sliding bearing in a condition of an unbalanced load.
- **FIG. 6B**: is a section view of the vehicle thrust sliding bearing in the condition of the unbalanced load.
- **FIG. 7**: is an enlarged section view of the vehicle thrust sliding bearing of a second embodiment of the present invention.

### MODE FOR CARRYING OUT THE INVENTION

A specific embodiment of the invention may take any form as long as a vehicle thrust bearing includes an annular upper case that is in contact with a vehicle body-side mount portion and an annular lower case overlapping with the upper case rotatably with respect to each other, the vehicle thrust bearing being configured to bear a thrust load at a contact spot where the upper case comes into direct or indirect contact with the lower case, wherein a labyrinth structure composed of an annular concave portion and an annular convex portion formed concentrically on the upper case and the lower case is formed on a case outer circumferential side or a case inner circumferential side with respect to the contact spot, and wherein the labyrinth structure includes a labyrinth spacer member configured to prevent the annular concave portion from coming into direct contact with the annular convex portion and installed between the annular concave portion and the annular convex portion to reduce a sliding friction caused when the annular upper case and the annular lower case rotate with respect to each other as compared to a case where the annular concave portion comes into direction contact with the annular convex portion in the labyrinth structure, thus preventing an increase of torque, preventing abnormal sound from being generated, and preventing a leakage of lubricant oil.

For instance, the labyrinth spacer member may be a sheet-like member formed of a sliding member as long as it prevents the direct contact of the annular concave portion and the annular convex portion forming the labyrinth structure.

Still further, the vehicle thrust bearing may include a bearing piece interposed in an annular space created between the upper case and the lower case to bear a thrust load applied from a tire side, or may be configured such that the upper case slides directly with the lower case without including the bearing piece.

In a case where the vehicle thrust bearing includes the bearing piece, the bearing piece may be a sliding bearing piece that slides with the upper case or the lower case or may be a rolling bearing piece that rollably keeps a rolling member such as a ball.

A suspension of a vehicle may have any configuration as long as it has a configuration to which a thrust load is applied.

The upper case may have any configuration as long as it abuts on the vehicle body-side mount portion. A strut type suspension, i.e., an exemplary suspension, may be either a type in which an upper end portion of a piston rod of a shock absorber is fitted with the vehicle body-side mount portion or a type in which it is fitted with the upper case.

A material forming the upper case may be thermoplastic synthetic resin such as polyacetal resin, polyamide resin, and polybutylene terephthalate resin.

A material forming the lower case may be reinforced thermoplastic synthetic resin such as polyacetal resin, polyamide resin, and polybutylene terephthalate resin containing a reinforcing filler such as glass fiber, glass powder, carbon fiber by 0 to 50 mass %.

A preferable exemplary material forming the labyrinth spacer member and the sliding bearing piece is thermoplastic synthetic resin such as polyolefin resin containing polyacetal resin, polyamide resin, polybutylene terephthalate resin and polyethylene resin.

### First Embodiment

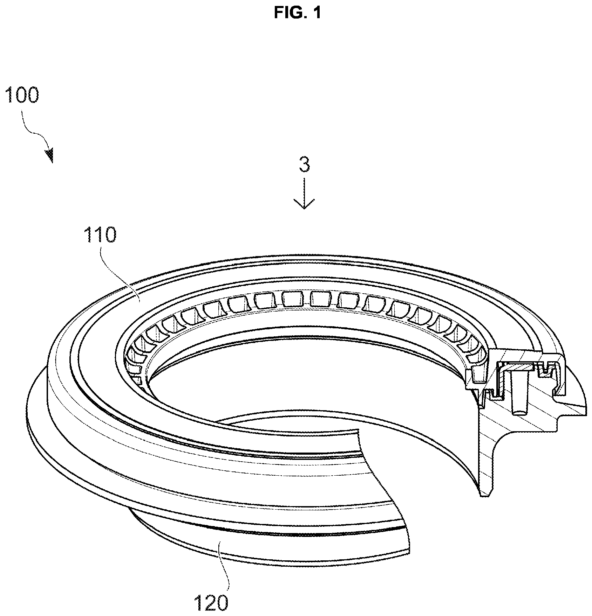

The vehicle thrust sliding bearing 100 of a first embodiment of the present invention will be described below with reference to FIGs. 1 through 6B.

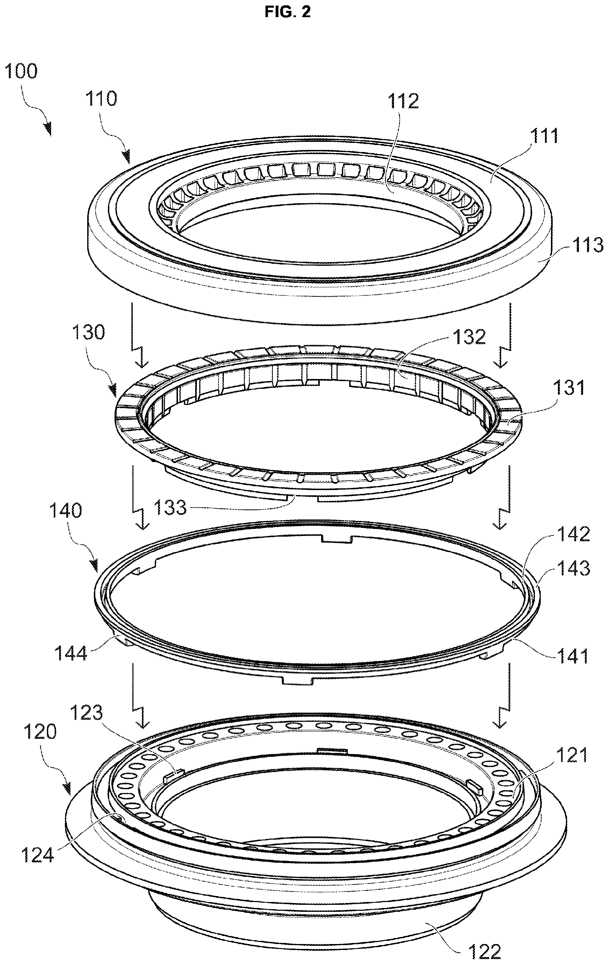

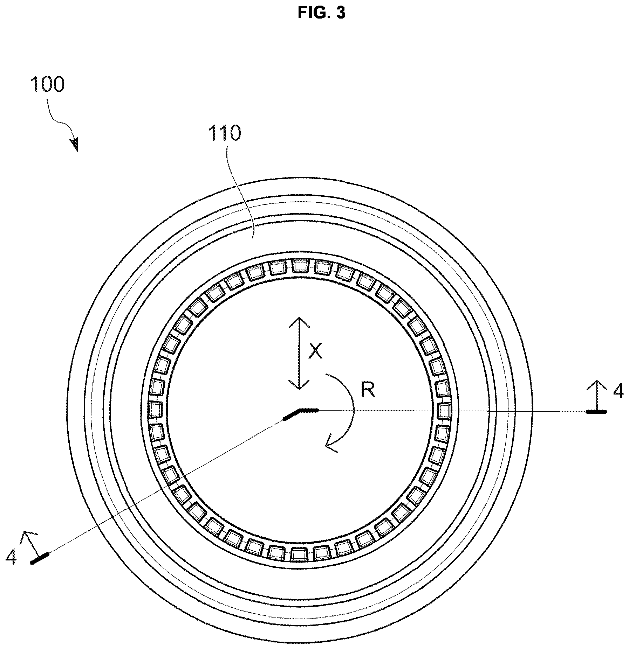

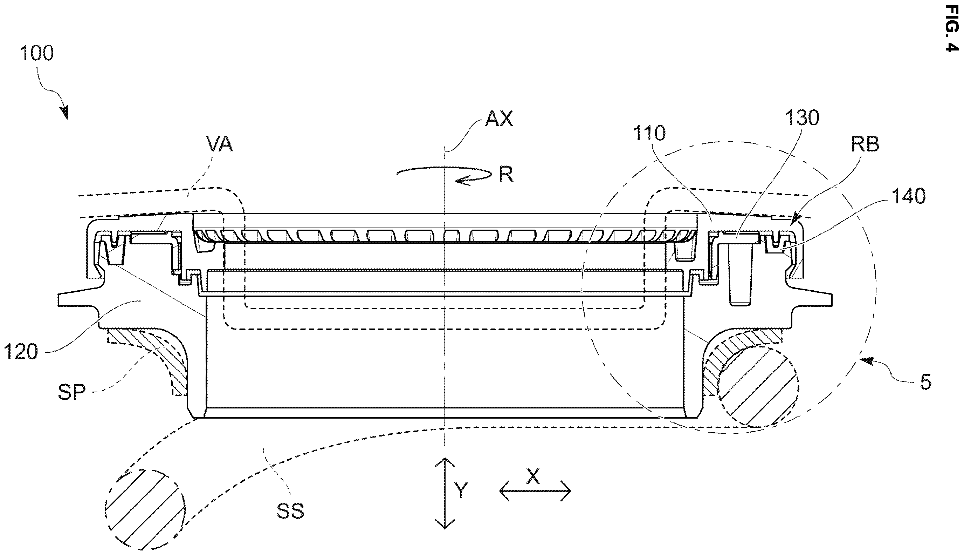

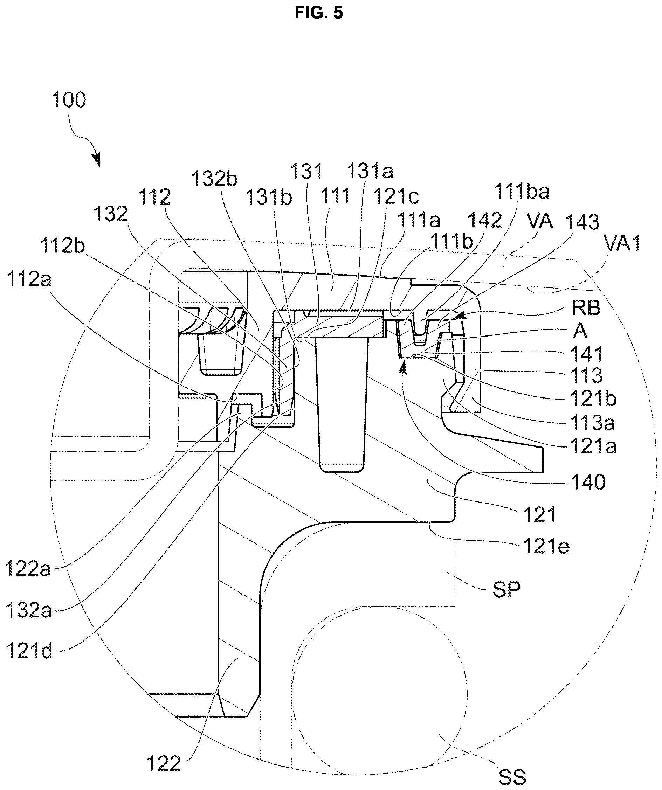

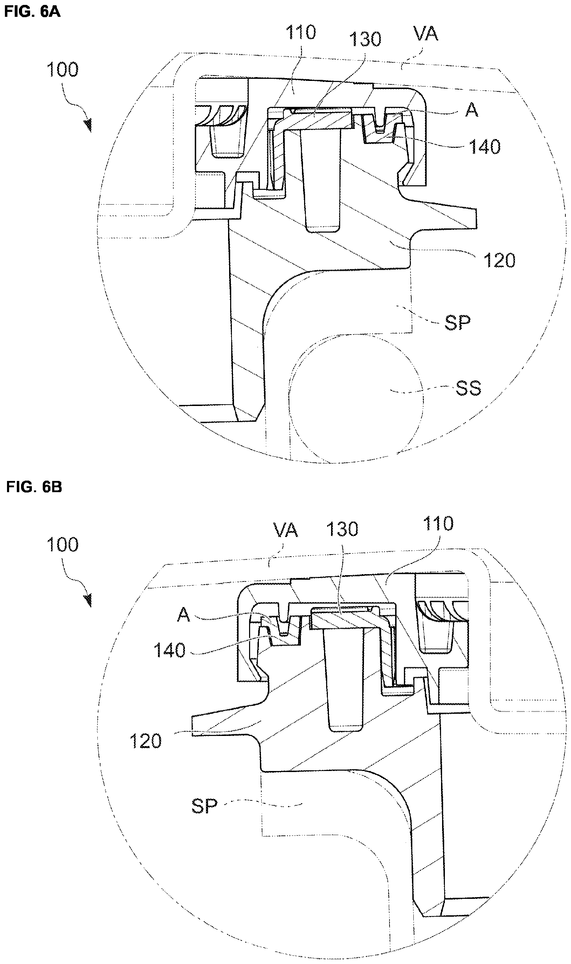

Here, FIG. 1 is a partially sectional perspective view of a vehicle thrust sliding bearing 100 of a first embodiment of the present invention, FIG. 2 is an exploded perspective view of the vehicle thrust sliding bearing 100 of the first embodiment of the present invention, FIG. 3 is a plan view seen from a reference numeral 3 indicated in FIG. 1, FIG. 4 is a section view taken along a reference numeral 4-4 indicated in FIG. 3, FIG. 5 is an enlarged section view of a spot indicated by a reference numeral 5 in FIG. 4, and FIGs. 6A and 6B are section views of the vehicle thrust sliding bearing in a condition in which a load is unbalanced, wherein FIG. 6A is a section view of a side thereof on which the load acts largely more than that of FIG. 6B.

As illustrated in FIGs. 1 through 6B, the vehicle thrust sliding bearing 100 serving as a vehicle thrust bearing of the first embodiment of the present invention includes an annular upper case 110 made of synthetic resin, an annular lower case 120 made of synthetic resin containing glass fibers as reinforcing filler, and an annular sliding bearing piece 130 made of synthetic resin and serving as a bearing piece.

Among them, the upper case 110 is configured to abut on a vehicular mount member VA serving as a vehicle body-side mount portion.

According to the present embodiment, the upper case 110 integrally includes an annular upper case base 111 forming an annular upper case upper surface 111a and an annular upper case bottom surface 111b in an axial direction Y of a piston rod, an inner circumferential cylindrical portion 112 suspended from an inner circumferential end in a radial direction X of the upper case base 111, and an outer circumferential cylindrical portion 113 suspending from an outer circumferential end in the radial direction X of the upper case base 111.

The lower case 120 is configured to overlap rotatably with respect to the upper case 110 around an axial center AX of the piston rod.

According to the present embodiment, the lower case 120 integrally includes an annular lower case base 121 rotatably overlapped with the upper case 110 around the axial center AX and an inner circumferential cylindrical portion 122 suspended from an inner radial side of the lower case base 121.

An inner annular engage hook 121a is formed on a radial outer side of the lower case base 121 and engages, rotatably in a circumferential direction R, with the outer annular engage hook 113a formed on an outer circumferential cylindrical portion 113 of the upper case 110.

Still further, an outer annular concave groove 121b serving as an annular concave portion is formed on a radial inner side of the inner annular engage hook 121a of the lower case base 121.

The outer annular concave groove 121b is formed concentrically with an outer annular projection thread 111ba serving as an annular convex portion formed on the upper case bottom surface 111b, and is provided such that the outer annular concave groove 121b engages with the outer annular projection thread 111ba with a slight gap between them. Thus, the outer annular concave groove 121b and the outer annular projection thread 111ba forms a so-called labyrinth structure RB.

A labyrinth spacer member 140 formed of the same raw material of synthetic resin as the annular sliding bearing piece 130 for example is provided in the outer annular concave groove 121b.

Still further, an inner annular projection thread 122a is formed inside of the inner circumferential cylindrical portion 122 of the lower case 120. The inner annular projection thread 122a is provided such that it engages with an inner annular concave groove 112a formed at a lower end of the inner circumferential cylindrical portion 112 of the upper case 110 with a slight gap between them.

The annular sliding bearing piece 130 is interposed within an annular space created between the upper case 110 and the lower case 120 and is configured to bear thrust load and radial load applied from a tire side.

According to the present embodiment, the annular sliding bearing piece 130 is provided in the annular space between the upper case bottom surface 111b of the upper case base 111 and a lower case upper surface 121c of the lower case base 121 and in annular space between an outer circumferential surface 112b of the inner circumferential cylindrical portion 112 and an inner circumferential surface 121d of the lower case base 121.

The annular sliding bearing piece 130 includes an annual thrust sliding bearing piece portion 131, a cylindrical radial sliding bearing piece portion 132, and a bearing piece-side anti-rotation concave portion 133 projecting downward from the thrust sliding bearing piece portion 131.

The thrust sliding bearing piece portion 131 includes a bearing upper surface 131a slidably coming into contact with the upper case bottom surface 111b of the upper case base 111 and a bearing bottom surface 131b coming into contact with the lower case upper surface 121c of the lower case base 121 of the lower case 120.

Meanwhile, the radial sliding bearing piece portion 132 includes a bearing inner circumferential surface 132a coming into slidable contact with the outer circumferential surface 112b of the inner circumferential cylindrical portion 112 of the upper case 110 and a bearing outer circumferential surface 132b coming into contact with the inner circumferential surface 121d of the lower case base 121 of the lower case 120.

The bearing piece-side anti-rotation concave portion 133 engages with a bearing piece anti-rotation convex portion 123 formed on the inner circumferential surface 121d of the lower case base 121 of the lower case 120 and restrains the rotation of the annular sliding bearing piece 130 with respect to the lower case 120.

It is noted that while the bearing piece-side anti-rotation concave portion 133 and the bearing piece anti-rotation convex portion 123 are provided in the present embodiment so that the annular sliding bearing piece 130 does not rotate with respect to the lower case 120, it is also possible to configure such that the annular sliding bearing piece 130 rotates with respect to the lower case 120 without providing those components.

As illustrated in FIGs. 4 and 5, a spring pad SP formed annularly of rubber is provided at a lower case bottom surface 121e of the lower case base 121.

The vehicle thrust sliding bearing 100 is incorporated into a Strut type (MacPherson type) suspension by installing the vehicle thrust sliding bearing 100 between a vehicular seating surface VA1 of a vehicular mounting member VA and a damper coil spring SS such that the upper case upper surface 111a of the upper case 110 abuts on the vehicular seating surface VA1 of the vehicular mounting member VA and the spring pad SP abuts on an upper end of the damper coil spring SS.

It is noted that the spring pad SP may be formed integrally with the lower case 120.

According to the present embodiment, the labyrinth spacer member 140 is installed in the labyrinth structure RB that is located outer than the annular sliding bearing piece 130 between the upper case 110 and the lower case 120.

The labyrinth spacer member 140 is configured to prevent the outer annular concave groove 121b from coming into direct contact with the outer annular projection thread 111ba, to narrow the gap of the labyrinth structure RB and to reduce sliding friction when the outer annular concave groove 121b and the outer annular projection thread 111ba rotate relatively as compared to a case where they come into direct contact.

Specifically, as illustrated in FIG. 5, the labyrinth spacer member 140 includes a spacer base 141, an inner circumferential annular projection thread 142, an outer circumferential annular projection thread 143 and a spacer-side anti-rotation engage portion 144.

Among them, the spacer base 141 is configured to be installed in the outer annular concave groove 121b of the lower case 120.

Still further, the inner circumferential annular projection thread 142 and the outer circumferential annular projection thread 143 are provided such that they project to the upper case side so as to be branched from the spacer base 141 in section viewed from the circumferential direction R.

Then, the labyrinth structure RB is configured such that the outer annular projection thread 111ba of the upper case 110 enters between the inner circumferential annular projection thread 142 and the outer circumferential annular projection thread 143 in non-contact condition in no-load state.

This arrangement makes it possible to avoid the outer annular concave groove 121b from coming into direct contact with the outer annular projection thread 111ba and to narrow the gap of the labyrinth structure RB.

Then, it becomes possible to prevent foreign matters such as dust from infiltrating into the spot where the annular sliding bearing piece 130 within the vehicle thrust sliding bearing comes into contact with the upper case 110 or the lower case 120 from the gap between the upper case 110 and the lower case 120. It also becomes possible to prevent the leakage of the lubricant oil filled in the spot where the annular sliding bearing piece 130 comes into contact with the upper case 110 or the lower case 120 from the gap formed between the upper case 110 and the lower case 120.

Still further, according to the present embodiment, the raw material of the labyrinth spacer member 140 is the same as the annular sliding bearing piece 130 as described above.

Thereby, even if the labyrinth spacer member 140 comes into contact with the upper case 110, the labyrinth spacer member 140 smoothly slides with respect to the upper case 110.

Still further, when no load is applied in the present embodiment, the labyrinth spacer member 140 is in contact with the lower case 120 but is contactless with the upper case 110 as illustrated in FIG. 5.

Although the labyrinth spacer member 140 is basically contactless with the upper case 110 during when a load is applied, the labyrinth spacer member 140 is configured to come into point contact with the upper case 110 in a section A viewed from the circumferential direction R as illustrated in FIG. 6A even if the labyrinth spacer member 140 comes into contact with the upper case 110.

Thereby, no sliding friction is generated between the labyrinth spacer member 140 and the upper case 110 during when no load is applied, and the sliding friction generated between the labyrinth spacer member 140 and the upper case 110 becomes very small during when a load is applied.

As a result, the sliding fiction caused by the labyrinth spacer member 140 can be minimized.

It is also possible to restrain the abnormal sound otherwise caused by the sliding friction.

Still further, as illustrated in FIGs. 6A and 6B, in a case where an unbalanced load is generated in the circumferential direction R by the damper coil spring SS of the suspension for example, the relative positions of the upper case 110 and the lower case 120 change slightly.

Even in such a case, the gap of the labyrinth structure RB on the both sides where the load acts largely and where the load acts small becomes small, and the sliding friction generated between the labyrinth spacer member 140 and the upper case 110 becomes very small.

Still further, according to the present embodiment, the labyrinth spacer member 140 includes the spacer-side anti-rotation engage portion 144 serving as a rotation stopping engage portion that engages with a spacer anti-rotation engage portion 124 of the lower case 120 to restrict the relative rotation.

Thereby, the labyrinth spacer member 140 does not slide with the lower case 120.

That is, a degree of freedom of selection of a raw material of the lower case 120 is improved.

The vehicle thrust sliding bearing 100 serving as the vehicle thrust bearing of the first embodiment of the present invention is configured such that the labyrinth structure RB, composed of the outer annular concave groove 121b serving as the annular concave portion and the outer annular projection thread 111ba serving as the annular convex portion formed concentrically on the upper case 110 and the lower case 120, is formed on a case outer circumference side with respect to the annular sliding bearing piece 130 and such that the labyrinth spacer member 140 configured to prevent the outer annular concave groove 121b from coming into direct contact with the outer annular projection thread 111ba is installed between the outer annular concave groove 121b and the outer annular projection thread 111ba. Accordingly, it is possible to prevent an increase of torque and a generation of abnormal sound by avoiding the outer annular concave groove 121b and the outer annular projection thread 111ba, forming the labyrinth structure RB between the upper case 110 and the lower case 120, from coming into direct contact. It is also possible to prevent the leakage of the lubricant oil filled in the spot where the annular sliding bearing piece 130, formed between the upper case 110 and the lower case 120, comes into contact with the upper case 110 or the lower case 120.

Still further, because the annular sliding bearing piece 130 made of synthetic resin and bearing the thrust load is installed in the annular space created between the upper case 110 and the lower case 120, it is possible to make the relative rotation of the upper case 110 and the lower case 120 more smoothly.

Still further, because the labyrinth spacer member 140 is formed of the same raw material of synthetic resin as the annular sliding bearing piece 130, the sliding friction generated between the labyrinth spacer member 140 and the upper case 110 can be minimized.

Because the labyrinth spacer member 140 includes the spacer-side anti-rotation engage portion 144 serving as an anti-rotation engage portion restricting the relative rotation by engaging with the spacer anti-rotation engage portion 124 of the lower case 120, a degree of freedom of selection of the raw material of the lower case 120 can be increased. Thus, advantageous effects of the present embodiment are remarkable.

### Second Embodiment

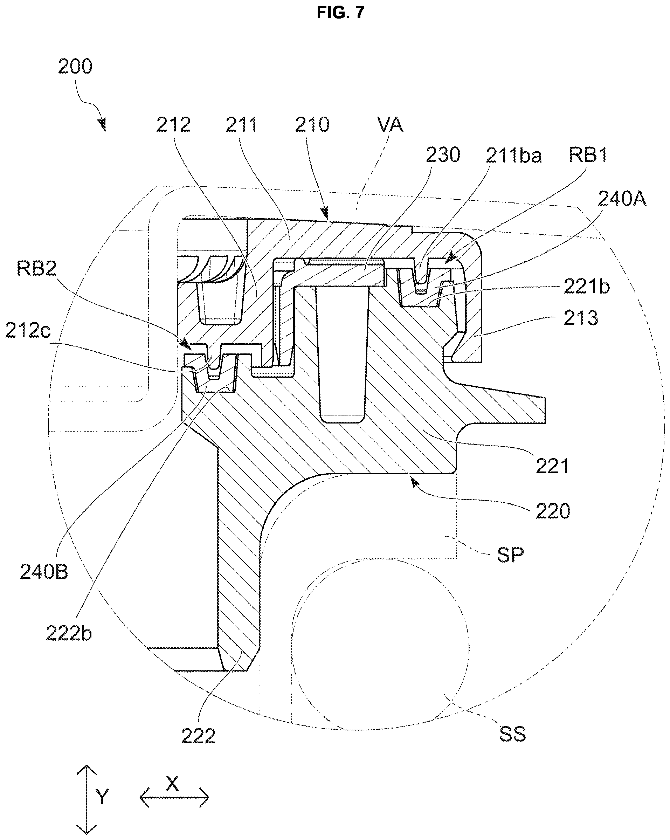

Next, a vehicle thrust sliding bearing 200 of a second embodiment of the present invention will be described with reference to FIG. 7.

Here, FIG. 7 is an enlarged section view of the vehicle thrust sliding bearing 200 of the second embodiment of the present invention.

The vehicle thrust sliding bearing 200 of the second embodiment is unique in that the labyrinth spacer member of the vehicle thrust sliding bearing 100 of the first embodiment is installed not only on the case outer circumferential side with respect to the annular sliding bearing piece 130 but also on a case inner circumferential side. Because many components are common with those of the vehicle thrust sliding bearing 100 of the first embodiment, the common components will be simply denoted by reference numerals of 200s with common last two digits and the detailed description thereof will be omitted.

As illustrated in FIG. 7, the vehicle thrust sliding bearing 200 of the second embodiment of the present invention is provided with an outer labyrinth spacer member 240A and an inner labyrinth spacer member 240B serving as labyrinth spacer members in labyrinth structures RB1 and RB2 between a lower case 220 and an upper case 210.

Among them, the outer labyrinth spacer member 240A is the same as the labyrinth spacer member 140 of the first embodiment described above and is installed on the case outer circumferential side with respect to an annular sliding bearing piece 230.

This arrangement makes it possible to avoid an outer annular concave groove 221b from coming into direct contact with an outer annular projection thread 211ba and to narrow the gap of the labyrinth structure RB1 on the case outer circumferential side with respect to the annular sliding bearing piece 230.

An inner annular projection thread 212c serving as an annular convex portion is formed on the upper case 210.

An inner annular concave groove 222b serving as an annular concave portion is also formed on the lower case 220.

The inner annular concave groove 222b is formed concentrically with the inner annular projection thread 212c and installed so as to mesh with the inner annular projection thread 212c with a very small gap. The inner annular projection thread 212c and the inner annular concave groove 222b form the labyrinth structure RB2 on the case inner circumferential side with respect to the annular sliding bearing piece 230.

Then, an inner labyrinth spacer member 240B formed of the same raw material of synthetic resin as the annular sliding bearing piece 230 for example is installed in the inner annular concave groove 222b.

That is, the inner labyrinth spacer member 240B is installed on the case inner circumferential side with respect to the annular sliding bearing piece 230.

This arrangement makes it possible to avoid the inner annular projection thread 212c from coming into direct contact with the inner annular concave groove 222b and to narrow the gap of the labyrinth structure RB2 on the case inner circumferential side with respect to the annular sliding bearing piece 230.

As described above, the both of the outer labyrinth spacer member 240A and the inner labyrinth spacer member 240B may be installed in the labyrinth structures or only either one may be installed.

### DESCRIPTION OF REFERENCE NUMERALS

- 100, 200: vehicle thrust sliding bearing
- 110, 210: uppercase
- 111: upper case base
- 111a: upper case upper surface
- 111b: upper case bottom surface
- 111ba, 211ba: outer annular projection thread
- 112: inner circumferential cylindrical portion
- 112a: inner annular concave groove
- 112b: outer circumferential surface
- 113, 213: outer circumferential cylindrical portion
- 113a: outer annular engage hook
- 120, 220: lowercase
- 121: lower case base
- 121a: inner annular engage hook
- 121b, 221b: outer annular concave groove
- 121c: lower case upper surface
- 121d: inner circumferential surface
- 121e: lower case bottom surface
- 122: inner circumferential cylindrical portion
- 122a: inner annular projection thread
- 123: bearing-piece anti-rotation convex portion
- 124: spacer anti-rotation engage portion
- 130, 230: annular sliding bearing piece (bearing piece)
- 131: thrust sliding bearing piece portion
- 131a: bearing top surface
- 131b: bearing bottom surface
- 132: radial sliding bearing piece portion
- 132a: bearing inner circumferential surface
- 132b: bearing outer circumferential surface
- 133: bearing piece-side anti-rotation concave portion
- 140: labyrinth spacer member
- 240A: outer labyrinth spacer member
- 240B: inner labyrinth spacer member
- 141: spacer base
- 142: inner circumferential annular projecting thread
- 143: outer circumferential annular projecting thread
- 144: spacer-side anti-rotation engage portion (anti-rotation engage portion)
- A: section(of labyrinth spacer member viewed from circumferential direction)
- AX: axial center of piston rod
- R: circumferential direction
- RB: labyrinth structure
- SS: damper coil spring
- SP: spring pad
- VA: vehicular mounting member (vehicle body-side mount portion)

- VA1: vehicular seating surface
- X: radial direction
- Y: axial direction

## Claims

1. A vehicle thrust bearing comprising:
an annular upper case that is in contact with a vehicle body-side mount portion; and
an annular lower case overlapping with the upper case rotatably with respect to each other, the vehicle thrust bearing being configured to bear a thrust load at a contact spot where the upper case comes into direct or indirect contact with the lower case,
wherein a labyrinth structure composed of an annular concave portion and an annular convex portion formed concentrically on the upper case and the lower case is formed on a case outer circumferential side or a case inner circumferential side with respect to the contact spot, and
wherein the labyrinth structure comprises a labyrinth spacer member configured to prevent the annular concave portion from coming into direct contact with the annular convex portion and installed between the annular concave portion and the annular convex portion to reduce a sliding friction caused when the annular upper case and the annular lower case rotate with respect to each other as compared to a case where the annular concave portion comes into direction contact with the annular convex portion in the labyrinth structure.

2. The vehicle thrust bearing according to claim 1, wherein a sliding bearing piece made of synthetic resin and configured to bear a thrust load is installed in an annular space created between the upper case and the lower case.

3. The vehicle thrust bearing according to claim 2, wherein the labyrinth spacer member is formed of the same raw material of synthetic resin as the sliding bearing piece.

4. The vehicle thrust bearing according to any one of claims 1 through 3, wherein the labyrinth spacer member comprises an anti-rotation engage portion configured to engage with the lower case to restrict the relative rotation.

5. The vehicle thrust bearing according to any one of claims 1 through 4, wherein the lower case overlaps rotatably with the upper case around an axial center of a piston rod used in a shock absorber of a vehicular suspension and bears a load applied from a damper coil spring of the suspension.
